# EUROPEAN PATENT SPECIFICATION

(11) **EP 4 516 375 B1**
(45) Date of publication and mention of the grant of the patent: **22.04.2026**
(21) Application number: 24198072.1
(22) Date of filing: 03.09.2024
(51) Int. Cl.: B01D 29/64, A47L 15/42, D06F 39/10

(54) **MICROPLASTIC FILTERING SYSTEM INTEGRATED WITH A PRE-FILTERING ASSEMBLY, FOR A WASHING MACHINE, SUCH AS A LAUNDRY WASHING MACHINE**
MIKROPLASTIK-FILTERSYSTEM MIT INTEGRIERTER VORFILTEREINHEIT FÜR EINE WASCHMASCHINE, Z.B. EINE WÄSCHEWASCHMASCHINE
SYSTÈME DE FILTRAGE DES MICROPLASTIQUES INTÉGRÉ À UN ENSEMBLE DE PRÉ-FILTRAGE, POUR UNE MACHINE À LAVER, TELLE QU'UNE MACHINE À LAVER LE LINGE

(30) Priority: 04.09.2023 IT 202300018120
(43) Date of publication of application: 05.03.2025
(73) Proprietor: ELBI International S.p.A., 10129 Torino (IT)
(72) Inventor: BECCHIO, Marco, 10041 CARIGNANO (TO) (IT); BENEDETTO, Gianluca, 10129 Torino (IT); DAVI, Massimo, 10053 Bussoleno (TO) (IT); GARETTO, Luca, 10129 Torino (IT); MAIORANA, Luca, 10129 Torino (IT)
(74) Representative: Vitillo, Giuseppe

(56) References cited:
- CN-A- 107 447 452
- CN-A- 113 731 007
- CN-A- 114 808 397
- US-A1- 2023 030 772
- US-A1- 2023 078 618

## Description

### Technical field

The present invention relates to a microplastic filtering system for a washing machine, such as a laundry washing machine.

### Technical background

Microplastic filtering systems for washing machines, such as laundry washing machines, are known in the art.

In recent years, the use of synthetic fabrics has increased, resulting in larger amounts of micrometric synthetic microfibres contained in wastewater and hence in the environment, leading to more environmental pollution. In particular, when synthetic fabrics are washed, synthetic microfibres are produced/released which are not biodegradable, thus causing increased water pollution from microplastics (this term refers to particles and/or fibres less than 5 mm in length).

Patent publication EP 4 148 178 A1 by the present Applicant describes a microplastic filtering system specifically intended for use in a laundry washing machine. The system can filter microplastics contained in the washing liquid, which is then drained from the washing tub. Although such system is particularly advantageous and effective in comparison with those previously known in the art, it is nonetheless desirable to add thereto some improvements and refinements.

One drawback of the system disclosed by patent publication EP 4 148 178 A1 lies in the fact that, for such a system to be integrated into a laundry washing machine, it is necessary to add a further component, thus increasing the number of separate elements to be installed in the machine. This results in increased structural complexity of a laundry washing machine comprising such a system. US 2023/078618 A1, CN 107 447 452 A, CN 114 808 397 A and US 2023/030772 A1 show other relevant prior art documents.

### Summary of the invention

It is one object of the present invention to provide a microplastic filtering system for a washing machine, such as a laundry washing machine, wherein such system can remedy one or more drawbacks of the prior art.

In particular, compared with the prior art, the system made in accordance with the present invention solves the technical problem of not increasing the structural complexity of the laundry washing machine in which the system is intended to be installed. In this regard, an advantageous feature is the inclusion in the system of a pre-filtering assembly for a discharge pump of the washing machine in which said system is to be incorporated. In this way, notwithstanding the addition of such system to the laundry washing machine, the total number of separate components and elements is not increased, since the pre-filtering element is integrated into the system. Therefore, the system according to the present invention provides both filtering of any foreign bodies upstream of the discharge pump and filtering of microplastics.

According to the present invention, this and other objects are achieved through a system having the technical features set out in the appended independent claim.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided herein merely as a non-limiting example and referring, in particular, to the annexed drawings as summarized below.

### Brief description of the drawings

Figure **1** is a schematic view representing a washing machine, such as a laundry washing machine, in which a filtering system made in accordance with an illustrative embodiment of the present invention has been installed.
Figure **2** is a two-dimensional axial sectional view of the system shown in Figure **1****.**
Figure **3** is a view similar to Figure **2****,** wherein a part of the casing is shown in an extracted condition.
Figure **4** is an exploded perspective view of the system shown in the preceding Figures.
Figure **5** is a block diagram similar to the one of Figure **1****,** showing a filtering system according to a further embodiment of the present invention.
Figure **6** is a two-dimensional axial sectional view of the system shown in Figure **5****.**

For completeness' sake, the following is a list of alphanumerical references and names used herein to identify parts, elements and components illustrated in the above-summarized drawings.
- **WM.**: Laundry washing machine
- **C.**: Cabinet
- **T.**: Washing Tub
- **D.**: Discharge piping
- **D1.**: Initial duct
- **D2.**: Terminal duct
- **WS.**: Waste system
- **RD.**: Return duct
- **X-X.**: Longitudinal axis
- **10.**: Filtering system
- **12.**: Casing
- **14.**: Filtering cavity
- **14a.**: Central chamber
- **14b.**: Peripheral chamber
- **14c.**: Storing chamber
- **16.**: Inlet
- **18.**: Outlet
- **20.**: Storing container
- **21.**: Clamping ring
- **22.**: Tubular portion
- **24.**: Cover member
- **26.**: Closure member
- **28.**: Draining duct
- **29.**: Spacer
- **30.**: Sealing gaskets
- **32.**: Pre-filtering cavity
- **32a.**: Inflow chamber
- **32b.**: Outflow chamber
- **34.**: Inlet passageway
- **36.**: Outlet passageway
- **38.**: Central upright
- **40.**: Grip disc
- **41.**: Bottom wall
- **42.**: Braces
- **100.**: Filtering assembly
- **102.**: Hollow filtering body
- **104.**: Axial through aperture
- **106.**: Support shell
- **108.**: Lateral slots
- **200.**: Compacting assembly
- **202.**: Endless screw
- **204.**: Helicoidal profile
- **300.**: Driving assembly
- **302.**: Electric motor
- **303.**: Reduction gear train
- **304.**: Shaft
- **400.**: Draining pump
- **402.**: Rotor
- **404.**: Tube
- **406.**: Inlet opening
- **408.**: Outlet opening
- **410.**: Elbow connection
- **500.**: Pre-filtering assembly
- **502.**: Transverse septum
- **504.**: Narrow openings
- **600.**: Discharge pump
- **602.**: Pump inlet
- **604.**: Pump outlet

### Detailed description of the invention

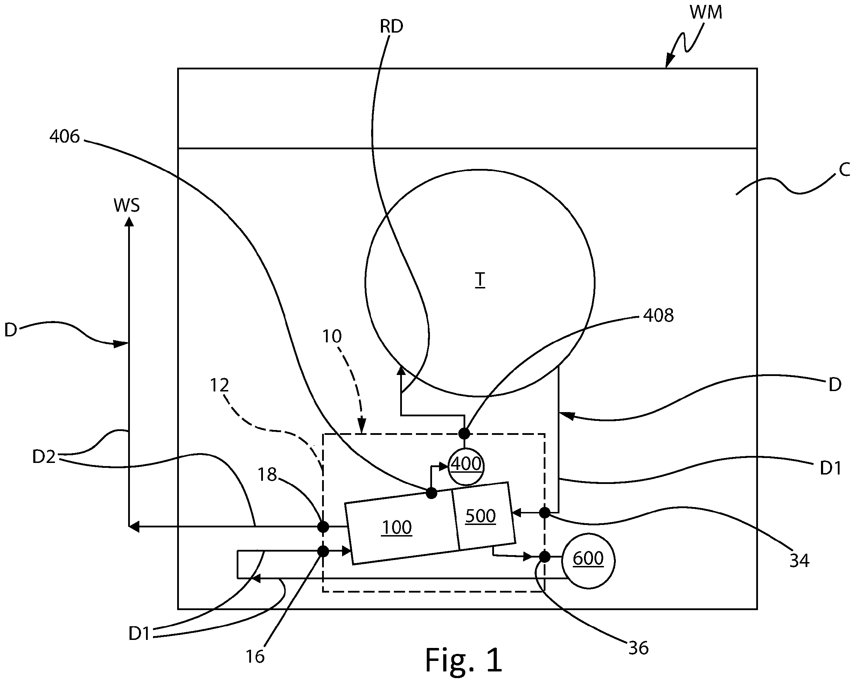

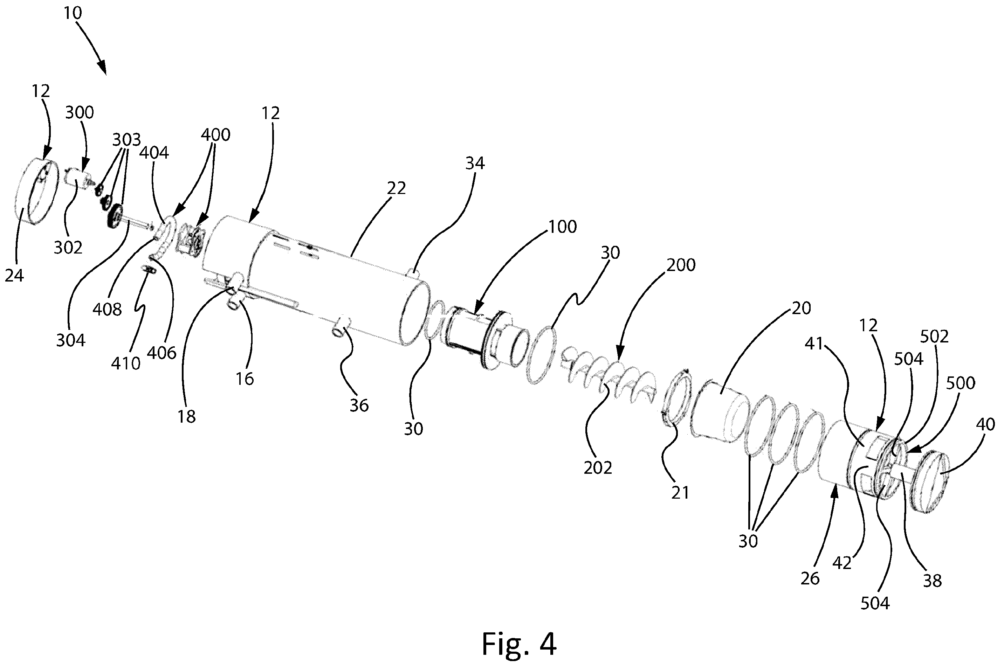

With reference to Figures 1 to 4, numeral **10** designates as a whole a microplastic filtering system made in accordance with an illustrative embodiment of the present invention. System **10** is applicable to a washing machine, such as a laundry washing machine. The term "microplastics" refers to particles and/or fibres of synthetic or plastic material which are less than 5 mm in length, and which, in particular, may also have micrometric dimensions.

In the embodiment illustrated herein, system **10** will be described with particular reference to a laundry washing machine **WM.**

With particular reference to Figure 1, laundry washing machine **WM** comprises a cabinet **C** in which a washing tub **T** is defined, which is sealed from the outside environment by a door (not shown). Laundry washing machine **WM** comprises also, in a per se known manner, a basket (not shown) rotatably mounted in washing tub **T.**

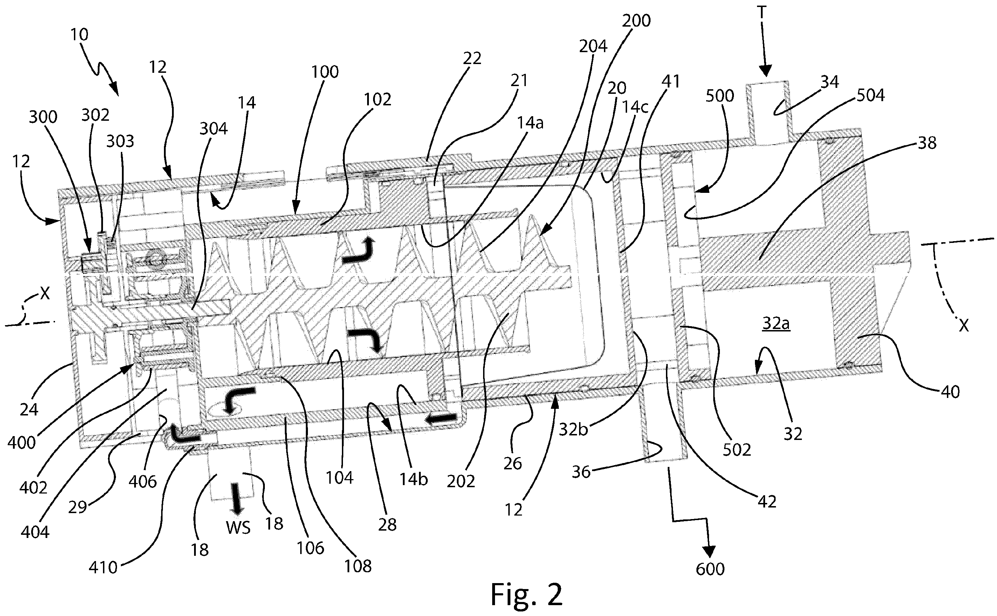

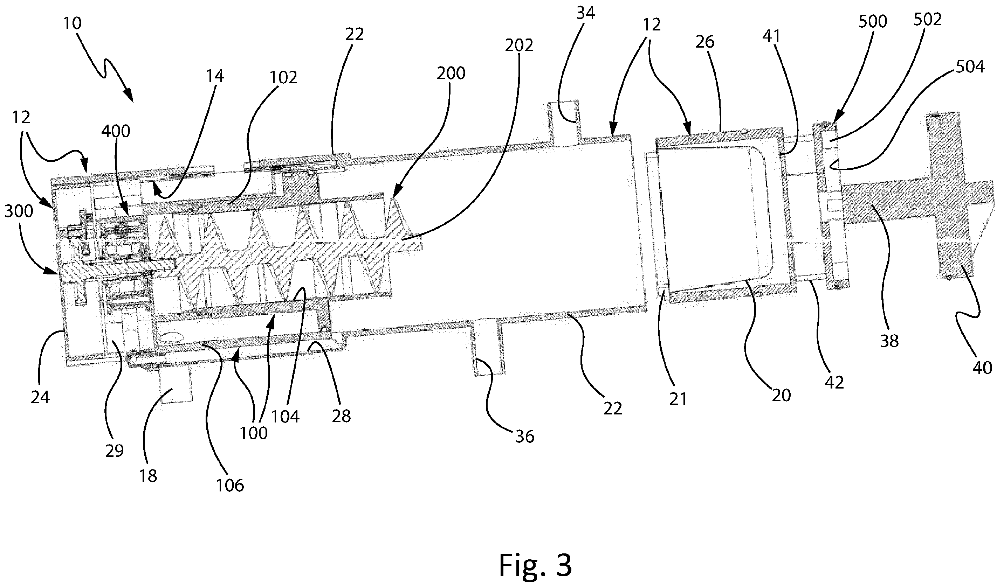

As will be further described below also with reference to Figures 2 to 4, system **10** comprises a casing **12** internally defining a filtering cavity **14** (details thereof are visible in Figures 2 and 3). Casing **12** has a substantially tubular shape and develops along a longitudinal axis **X-X.**

In the embodiment described herein, terms or expressions such as "axial" or "axially", "transversal" or "transversally", "radial" or "radially", "lateral" or "laterally", "internal" or "internally", "external" or "externally", "annular" or "annularly", "peripheral" or "peripherally" are meant to refer to longitudinal axis **X-X.**

In addition, casing **12** comprises an inlet **16** configured to receive a fluid that contains microplastics and leading into the filtering cavity **14.** Casing **10** comprises also an outlet **18** configured to deliver the fluid contained in filtering cavity **14,** from which the microplastics have been substantially removed.

System **10** further comprises a filtering assembly **100** contained in filtering cavity **14.** Filtering assembly **100** is configured to be crossed by the fluid entering casing **12** through inlet **16** and exiting through outlet **18,** thus internally trapping the microplastics contained in said fluid. In particular, filtering assembly **100** is, in a per se known manner, configured for trapping particles and/or fibres of synthetic or plastic material less than 5 mm in length, which may also, in particular, have micrometric dimensions.

In the embodiment shown in Figure 1, system **10** is fluidically mounted to a discharge piping, designated as a whole as **D,** of laundry washing machine **WM.** Discharge piping **D** is fluidically connected to washing tub **T** on one side and connectable to waste system **WS** on the other side. In particular, discharge piping **D** comprises an initial duct **D1** fluidically connected to washing tub **T** on one side and to inlet **16** of system **10** on the other side; discharge piping **D** comprises also a terminal duct **D2,** in turn fluidically connected to outlet **18** of system **10** on one side and fluidically connectable to waste system **WS** on the other side. Therefore, a "dirty" washing liquid, which contains microplastics, coming from washing tub **T** flows in initial duct **D1,** while the "filtered" washing liquid, substantially free from such microplastics, flows in terminal duct **D2.**

Furthermore, in the embodiment illustrated herein, washing machine **WM** comprises a discharge pump **600** crossed by initial duct **D1** and fluidically connected downstream of washing tub **T** and upstream of inlet **16** of system **10.** Discharge pump **600** is configured to push the washing liquid, containing microplastics and coming from washing tub **T,** towards inlet **16** of system **10.**

System **10** comprises also a pre-filtering system **500** configured to be fluidically connected upstream of discharge pump **600** for trapping any foreign bodies that may be present in the microplastic-containing washing liquid. Thanks to such technical features, the structural complexity of the washing machine in which system **10** is installed is not increased.

In a per se known manner, pre-filtering assembly **500** is configured to be crossed by the microplastic-containing washing liquid - which will then be filtered by filtering assembly **110** - and trap any foreign bodies that may be present in such washing liquid. Typically, foreign bodies are much bigger than microplastic particles, and may damage discharge pump **600.**

In particular, pre-filtering assembly **500** is crossed by initial duct **D1** and is fluidically connected downstream of washing tub **T.** Pre-filtering assembly **500** is configured for filtering any foreign bodies that may be present in the microplastic-containing washing liquid coming from washing tub T before the washing liquid enters discharge pump **600.** Typically, the outlet of pre-filtering assembly **500** is hydraulically connected to the inlet of discharge pump **600.** Therefore, pre-filtering assembly **500** and discharge pump **600** are fluidically connected in series in initial duct **D1.**

In the embodiment illustrated herein, pre-filtering assembly **500** is supported by casing **12.** In more detail, casing **12** internally defines a pre-filtering cavity **32** which is fluidically separate from filtering cavity **14.** Pre-filtering cavity **32** houses pre-filtering assembly **500.**

In particular, casing **12** has an inlet passageway **34** configured to receive the washing liquid containing microplastics and any foreign bodies, and leading into pre-filtering cavity **32** upstream of pre-filtering assembly **500.**

In addition, casing **12** has an outlet passageway **36** configured to deliver the microplastic-containing washing liquid, which is intended to cross pre-filtering cavity **32,** and from which any foreign bodies have been substantially removed.

Inlet passageway **34** is also configured to be hydraulically connected downstream of washing tub **T** of laundry washing machine **WM.**

Outlet passageway **36** is also configured to be hydraulically connected upstream of inlet **16** and of discharge pump **600.**

System **10** comprises, therefore, two filters, comprising filtering assembly **100** and pre-filtering assembly **500,** which are fluidically decoupled from each other, and between which discharge pump **600** is fluidically interposed.

Pre-filtering assembly **500** comprises a transverse septum **502** situated in pre-filtering cavity **32** and having a plurality of narrow openings **504** configured to be crossed by the micro-plastic-containing washing liquid and to trap any foreign bodies that may be present in the washing liquid.

In the embodiment illustrated herein, casing **12** comprises a tubular portion **22,** a cover member **24** and a closure member **26** sealingly connected to tubular portion **22** on opposite sides, thereby internally defining filtering cavity **14.** In particular, filtering cavity **14** is laterally delimited by tubular portion **22** and axially delimited, on opposite sides, by cover member **24** and closure member **26.** Tubular portion **22** develops around longitudinal axis **X-X.**

In particular, pre-filtering cavity **32** is laterally delimited by tubular portion **22,** while being - as will be described in more detail hereafter - axially delimited on opposite sides by walls of closure member **26.**

As will be described in more detail below, inlet **16** and outlet **18** lead into filtering cavity **14** through casing **12** in a substantially transversal direction (i.e. substantially perpendicular to longitudinal axis **X-X).** In the embodiment illustrated herein, inlet **16** and outlet **18** are formed laterally on casing **12,** i.e. with axes oriented transversally to longitudinal axis **X-X.** In more detail, inlet **16** and outlet **18** are formed on tubular portion **22.** In the embodiment illustrated herein, inlet **16** and outlet **18** are provided as fittings laterally protruding from casing **12,** in particular from tubular portion **22.**

In the embodiment illustrated herein, inlet passageway **34** and outlet passageway **36** lead into pre-filtering cavity **32** through casing **12** in a substantially transversal direction (i.e. substantially perpendicular to longitudinal axis **X-X).** In the illustrated embodiment, inlet passageway **34** and outlet passageway **36** are formed laterally on casing **12,** i.e. with axes oriented transversally to longitudinal axis **X-X.** In more detail, inlet passageway **34** and outlet passageway **36** are formed on tubular portion **22.** In the illustrated embodiment, inlet passageway **34** and outlet passageway **36** are provided as fittings laterally protruding from casing **12,** in particular from tubular portion **22,** axially offset relative to longitudinal axis **X-X** and radially offset by 180° relative to longitudinal axis **X-X.**

In the embodiment illustrated herein, pre-filtering assembly **500** is supported by closure member **26.** In particular, closure member **26** comprises a central upright **38** extending from transverse septum **502** and coaxial to longitudinal axis **X-X.** Openings **504** extend in a sunburst pattern on transverse septum **502** around central upright **38.**

In particular, closure member **26** comprises a grip disc **40** mounted to central upright **38** on the side axially opposite transverse septum **502.** In particular, grip disc **40** and transverse septum **502** are sealingly mounted within tubular portion **22.**

System **10** comprises also a compacting assembly **200** situated in filtering cavity **14** and configured for collecting and compacting the microparticles trapped by filtering assembly **100.**

In addition, system **10** comprises a driving assembly **300** configured to drive compacting assembly **200.** Preferably, driving assembly **300** comprises a motor, in particular an electric motor **302.** In the illustrated embodiment, electric motor **302** co-operates with a reduction gear train **303** to drive compacting assembly **200.** In particular, driving assembly **300** is housed in cover member **24.**

Preferably, filtering assembly **100** comprises a hollow filtering body **102** having an axial through aperture **104.** Hollow filtering body **102** comprises, advantageously, a plurality of concentrical cylindrical filtering layers of different mesh gauges suitable for trapping microplastic particles of different sizes. In the embodiment illustrated herein, filtering assembly **100** comprises a support shell **106,** in which hollow filtering body **102** is mounted. In addition, support shell **106** has a plurality of lateral apertures or slots **108** (only one of which is numbered in Figure 2) forming a "cage" that laterally supports hollow filtering body **102** and allows fluid to flow therethrough. In the embodiment illustrated herein, filtering assembly **100** is removable from casing **12.**

Preferably, as will be described hereafter, compacting assembly **200** extends axially through filtering assembly **100.** In particular, axial through aperture **104** of hollow filtering body **102** is crossed by compacting assembly **200.**

In the embodiment illustrated herein, compacting assembly **200** is configured to remove microplastics from the inner surface of hollow filtering body **102,** in particular conveying them out of filtering assembly **100.** In other words, compacting assembly **200** is operatively mounted in contact with the inner lateral surface of hollow filtering body **102,** defined by axial through aperture **104,** for removing microplastics from the filtering assembly. In this manner, compacting assembly **200** is configured to operatively slide against said inner lateral surface of hollow filtering body **102,** thereby removing microplastics from such surface.

In the illustrated embodiment, compacting assembly **200** comprises an endless screw **202** configured to be rotatably driven by driving assembly **300,** so as to axially push the solid particles trapped by filtering assembly **100.**

In addition, endless screw **202** is housed in axial through aperture **104** of hollow body **102,** and is substantially aligned axially with longitudinal axis **X-X.**

In particular, endless screw **202** has a helicoidal profile **204** that, in a per se known manner, facilitates the conveyance of microplastics out of filtering assembly **100.** In other words, helicoidal profile **204** is operatively mounted in contact with the inner lateral surface of hollow filtering body **102.** In this way, helicoidal profile **204** - rotatably driven by driving assembly **300** - can effectively remove the microplastics deposited on said surface of hollow filtering body **102.** In fact, helicoidal profile **204** is configured to rotatably slide against said surface of hollow filtering body **100,** thereby removing microplastics therefrom.

As clearly visible in Figure 2, filtering cavity **14** is divided into a plurality of chambers **14a, 14b, 14c,** in particular by inner walls of casing **12** and/or outer walls of filtering assembly **100,** in particular of support shell **106.** There is a central chamber **14a,** laterally and axially delimited within filtering assembly **100,** into which inlet **16** directly leads; central chamber **14a** is axially crossed by compacting assembly **200** (in particular, by endless screw **202).** In particular, central chamber **14a** is also delimited laterally within hollow filtering body **102** and axially by an axial end of support shell **106.** There is also a peripheral chamber **14b** situated around central chamber **14a** and bordering thereon via the walls of hollow filtering body **102,** while it is delimited axially by an axial end of support shell **106;** outlet **18** extends from peripheral chamber. Lastly, there is a storing chamber **14c** facing towards compacting assembly **12** (in particular, facing towards a free end of endless screw **202).** In addition, storing chamber **14c** is adjacent, in the axial direction, to central chamber **14a** and in direct fluidic communication with such central chamber **14a;** said storing chamber **14c** is laterally and axially delimited by casing **12,** in particular by closure member **26.**

System **10** further comprises a storing container **20** situated in storing chamber **14c** and facing towards compacting assembly **200.** Storing container **20** is configured to receive the microplastics collected and compacted by compacting assembly **200.** Particularly, storing container **20** is removable from filtering cavity **14** and accessible through casing **12.**

In the embodiment illustrated herein, storing container **20** is housed in closure member **26,** which internally defines storing chamber **14c.** In particular, storing container **20** is substantially cup-shaped, and closure member **26** is substantially glass-shaped. In particular, storing container **20** and closure member **26** are mutually assembled by means of a clamping ring **21,** wherein a peripheral edge of storing container **20** is axially locked between clamping ring **21** and a corresponding peripheral edge of closure member **26.** In addition, axial through aperture **104** of hollow body **102** faces towards storing container **20.** Closure member **26** is mounted to tubular portion **22** and removable, in particular repeatably and reversibly, therefrom. For example, as shown in Figure 3, closure member **26** can be coupled to and, respectively, removed from tubular portion **22** (or, more generally, the rest of casing **12),** so that a user can gain access to the inside of casing **12.** Particularly, a bayonet mechanism or a threaded connection may be provided for removably coupling closure member **26** to tubular portion **22** (or, more generally, to the rest of casing **12).** Therefore, by removing closure member **26** from tubular portion **22** it is possible to remove and/or replace storing container **20** from casing **12** in order to empty it of the microplastics accumulated therein and compacted by compacting assembly **200.**

In the embodiment illustrated herein, pre-filtering assembly **500,** in particular its transverse septum **502,** is mounted to closure member **26** on the side axially opposite storing container **20,** in particular on the bottom wall **41** that delimits storing chamber **14c.** Preferably, closure member **26** comprises a plurality of braces **42** axially connecting the periphery of bottom wall **41** to the periphery of transverse septum **502.**

In particular, in addition to being delimited laterally by tubular portion **22,** pre-filtering cavity **32** is also delimited axially by bottom wall **41** and by grip disc **40.** In more detail, pre-filtering cavity **32** is divided into an inflow chamber **32a,** where the washing liquid is intended to enter through inlet passageway **34,** and an outflow chamber **32b,** from where the washing liquid is intended to exit through outlet passageway **36** after any foreign bodies have been substantially removed therefrom. Inflow chamber **32a** and outflow chamber **32b** communicate with each other through pre-filtering assembly **500,** in particular through the narrow openings **504.** Inflow chamber **32a** is axially delimited by grip disc **40** and by transverse septum **502,** while outflow chamber **52b** is axially delimited by transverse septum **502** and by bottom wall **41.**

Preferably, closure member **26** provides a support structure which supports both storing container **20** and pre-filtering assembly **500,** forming a unitary module mounted repeatably and reversibly removable (e.g. extractable) from tubular portion **22.**

System **10** further comprises a draining pump **400** configured for taking in liquid contained in storing chamber **14c** and pushing such liquid out of casing **12.** Thus, liquid is prevented from stagnating in the storing container and interfering with the normal operation of compacting assembly **200,** with the risk of clogging filtering assembly **100** - particularly when system **10** is installed in laundry washing machine **WM** with longitudinal axis **X-X** oriented in a substantially horizontal direction (e.g. according to the arrangement shown in Figure 2). This increases the general filtering effectiveness of system **10.**

In the system arrangement shown in Figure 1, longitudinal axis **X-X** is oriented in a substantially horizontal direction, with such an inclination that storing chamber **12c** and storing container **20** are in a higher position than filtering assembly **100** and compacting assembly **200.** This facilitates the outflow of the washing liquid from central chamber **14a** towards peripheral chamber **14b.**

Preferably, draining pump **400** is of the peristaltic type. In particular, draining pump **400** comprises, in a per se known manner, a rotor **402** and an elastically deformable tube **404,** having an inlet opening **406** and an outlet opening **408** (only visible in Figure 3). Rotor **402** is configured to co-operate with the respective tube **404** to push the stagnating liquid contained in the corresponding storing chamber **14c.** Also, rotor **402** comprises a pair of projecting portions (not numbered), preferably situated on diametrically opposite sides, adapted to be placed in contact with the deformable walls of tube **404.** In particular, such projecting portions are adapted to locally throttle tube **404** and cause the liquid contained in the latter to flow on during the rotation of rotor **402.** Preferably, each one of the projecting portions comprises a peripheral roller adapted to locally press on tube **404** in order to throttle it.

In the embodiment illustrated herein, tube **404** is mounted in such a way that its outlet opening **408** leads out of system **10,** particularly out of casing **12,** so as to discharge in washing tub **T** any washing liquid **L** stagnating in storing chamber **14c.** In particular, as shown in Figure 1, laundry washing machine **WM** comprises a return duct **RD** hydraulically connected to outlet opening **408** on one side and to an inlet of washing tub **T** on the other side.

Preferably, casing **12** defines a draining duct **28** fluidically connected to storing chamber **14c** on one side and to the inlet of draining pump **400** on the other side - in particular, to inlet opening **406.** In the embodiment illustrated herein, the hydraulic connection of draining duct **28** is provided by means of an elbow connection **410** hydraulically connected to inlet opening **406** on one side and to one end of draining duct **28** on the other side.

Preferably, draining duct **28** is defined on the periphery of casing **12** (e.g. of the latter's tubular portion **22).**

In the embodiment illustrated herein, draining duct **28** extends along casing **12** (in particular, along tubular portion **22)** in a substantially axial direction.

In the embodiment illustrated herein, draining duct **28** is defined by an interspace laterally delimited between casing **12** (in particular, the latter's tubular portion **22)** and filtering assembly **100** (in particular, the latter's support shell **106).**

Preferably, draining pump **400** is supported between casing **12** (in particular, cover member **24)** and filtering assembly **100** (in particular, an axial end of support shell **106).** In addition, electric motor **302** and reduction gear train **303** are sealingly separated from draining pump **400** through the interposition of a spacer **29.**

Driving assembly **300** comprises a shaft **304** configured to be rotatably driven by electric motor **302,** in particular via reduction gear train **303,** for controlling compacting assembly **200.** In particular, shaft **304** extends in filtering cavity **14** in order to co-operate with compacting assembly **200.** In the illustrated embodiment, shaft **304** is coupled to endless screw **202** to control the rotation thereof, such two parts being, in particular, rotatably integral (e.g. keyed) with each other. In more detail, shaft **304** and endless screw **202** are substantially coaxial to each other and to longitudinal axis **X-X.**

Preferably, driving assembly **300** is also configured to control draining pump **400.** Thus, when system **10** is in operation, driving assembly **300** provides not only the action of compacting the microplastics towards storing container **20,** but also the action of draining any liquid stagnating in storing chamber **14c.**

In the embodiment illustrated herein, said driving assembly **300** comprises a shaft **304** controllable in rotation and mounted coaxial to both rotor **402** and endless screw **202.** In particular, shaft **304** is rotatably supported by casing **12** (in particular, by cover member **24** and/or spacer **29)** on one side and, on the axially opposite side, by filtering assembly **100** (in particular, by support shell **106,** e.g. by the top thereof). Particularly, shaft **304** axially and sealingly crosses spacer **29** to connect to rotor **402** and endless screw **202.**

By way of example, fluid-tightness of casing **12** is obtained by means of a plurality of sealing gaskets **30** interposed between members **24** and **26** and tubular portion **22.** In particular, sealing gaskets **30** have a substantially annular shape, e.g. they are O-rings.

For completeness' sake, the following will briefly describe the path followed by the washing liquid in system **10,** from washing tub **T** to waste system **WS.**

When system **10** is in operation, inlet passageway **34** is hydraulically connected to initial duct **D1** of discharge piping **D,** and is configured to receive, in a substantially transversal or radial direction, the washing liquid coming from washing tub **T** and containing microplastics and foreign bodies. Inlet passageway **34** then leads into inflow chamber **32a,** which receives the washing liquid and hydraulically communicates, in the axial direction, with outflow chamber **32b** through narrow openings **504** of transverse septum **502.** Thus, inflow chamber **32a** traps the foreign bodies upstream of transverse septum **502,** so that outflow chamber **32b** receives washing liquid substantially free from foreign bodies, but still containing microplastics.

Subsequently, from peripheral chamber **14b** the microplastic-containing washing liquid flows, transversally or radially, through the interspaces defined between braces **42** in outlet passageway **36** and out of tubular portion **22** of casing **12.** Outlet passageway **18** is connected to the inlet of discharge pump **600** through initial duct **D1** of discharge piping **D.**

Afterwards, inlet **16,** which is hydraulically connected to initial duct **D1** of discharge piping **D,** is configured to receive, substantially in a transversal or radial direction, the microplastic-containing washing liquid delivered by discharge pump **600.** Inlet **16** extends transversally or radially through tubular portion **22** of casing **12** and leads into central chamber **14a** defined by hollow filtering body **102.**

Central chamber **14a** receives the microplastic-containing washing liquid and hydraulically communicates, transversally or radially, with peripheral chamber **14b** through the sidewalls of hollow filtering body **102.** In particular, in the substantially horizontal arrangement of system **10** shown in Figure 2, the washing liquid flows from central chamber **14a** to peripheral chamber **14b** also by gravity, since peripheral chamber **14b** is underneath. Therefore, central chamber **14a** retains the microplastics within hollow filtering body **102,** so that peripheral chamber **14b** receives washing liquid which is substantially free from microplastics.

At the same time, central chamber **14a** hydraulically communicates, in the axial direction, with storing chamber **14c,** which, due to the action of compacting assembly **200,** receives the microplastics retained within the hollow filtering body, and traps them in storing container **20.** As previously described, any washing liquid **L** stagnating in storing chamber **14c** is drained out of it by draining pump **400.**

Subsequently, the washing liquid, from which microplastics have been substantially removed, flows out of peripheral chamber **14b,** transversally or radially, through outlet **18** to exit tubular portion **22** of casing **12.** Outlet **18** is connected to terminal duct **D2** of discharge piping **D,** thus delivering to waste system **WS** washing liquid which is substantially free from microplastics.

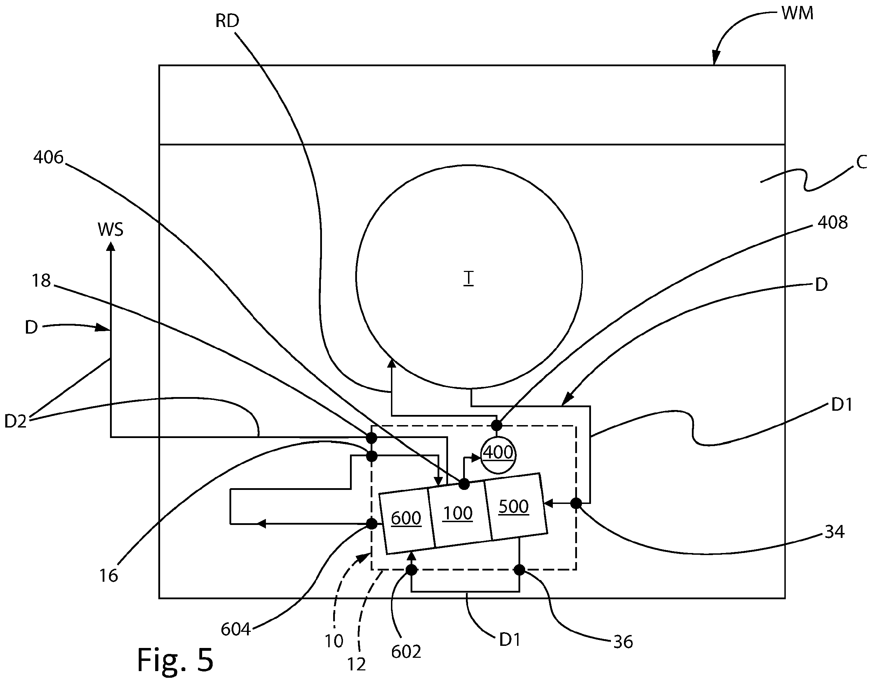

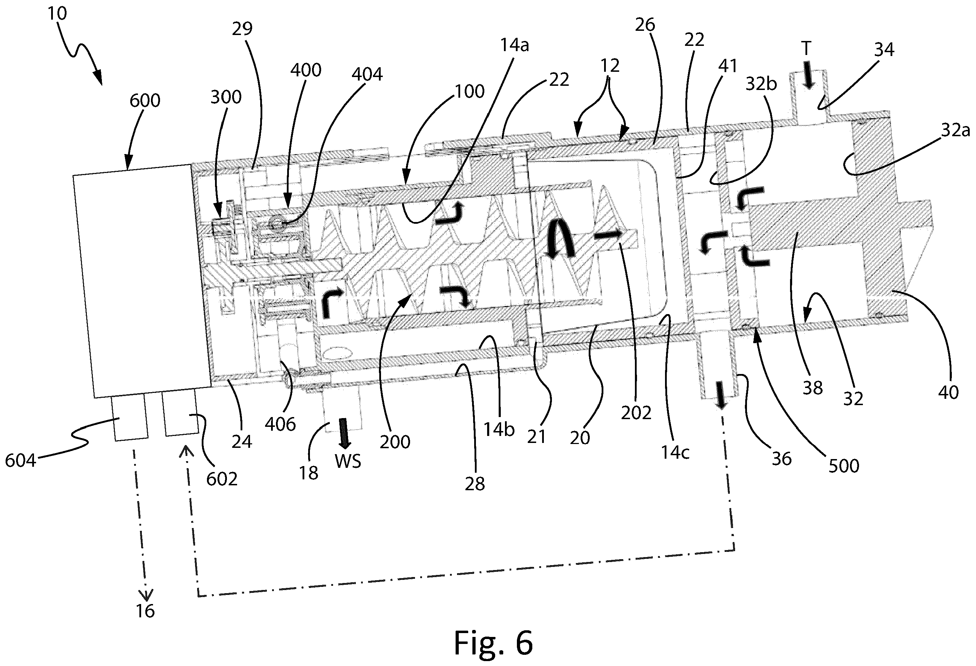

With reference to Figures 5 and 6, there is shown a system made in accordance with a further embodiment of the present invention.

Those parts and elements which are similar to - or which perform the same function as - those of the previously illustrated embodiment have been assigned the same reference numerals. For brevity, the description of such parts and elements will not be repeated below, and reference should be made to the description of the previous embodiment.

In the illustrated embodiment, system **10** further comprises discharge pump **600.**

In particular, discharge pump **600** is supported by casing **12.** In more detail, discharge pump **600** is supported by cover member **24,** in particular on the side axially opposite driving assembly **300.**

Pump inlet **602** of discharge pump **600** is fluidically connected downstream of outlet passageway **36,** while pump outlet **604** of discharge pump **600** is fluidically connected upstream of inlet **16.**

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. Microplastic filtering system for a washing machine, such as a laundry washing machine **(WM);** said system comprising:
- a casing **(12)** internally defining a filtering cavity **(14)** and comprising
an inlet **(16)** leading into the filtering cavity **(14)** and configured to be hydraulically connected downstream of a discharge pump **(600)** of said washing machine **(WM)** and to receive a fluid containing microplastics, and
an outlet **(18)** configured to deliver said fluid intended to cross said filtering cavity **(14),** from which said microplastics have been substantially removed;
- a filtering assembly **(100)** contained in the filtering cavity **(14)** and configured to be crossed by the fluid entering said casing **(12)** through the inlet **(16)** and exiting through said outlet **(18),** thus internally trapping said microplastics;
- a compacting assembly **(200)** situated in said filtering cavity **(14)** and configured for collecting and compacting the solid particles trapped by the filtering assembly **(100);**
said filtering system being **characterized in that** said casing **(12)** defines a pre-filtering cavity **(32)** which is fluidically separate from the filtering cavity **(14),** and further comprises
an inlet passageway **(34)** leading into said pre-filtering cavity **(32)** and configured to be connected downstream of a washing tub **(T)** of said washing machine **(WM)** and to receive said fluid containing microplastics and any foreign bodies, and
an outlet passageway **(36)** configured to deliver said microplastic-containing fluid intended to cross said pre-filtering cavity **(32),** from which said foreign bodies have been substantially removed, and configured to be fluidically connected upstream of said discharge pump **(600)** and said inlet **(16);** and
**in that** it further comprises a pre-filtering assembly **(500)** situated in said pre-filtering cavity **(32)** and configured to be crossed by the fluid entering said casing **(12)** through said inlet passageway **(34)** and exiting through said outlet passageway **(18),** thus trapping said foreign bodies, if any.

2. System according to claim 1, wherein said pre-filtering assembly **(500)** comprises a transverse septum **(502)** situated in said pre-filtering cavity **(32)** and having at least one narrow opening **(504)** configured to be crossed by said microplastic-containing fluid and to trap said foreign bodies, if any.

3. System according to claim **1** or **2,** further comprising said discharge pump **(600).**

4. System according to claim **3,** wherein said discharge pump **(600)** is supported by said casing **(12).**

5. System according to claim **4,** wherein said discharge pump **(600)** is situated on said casing **(12)** on the side opposite said pre-filtering assembly **(500).**

6. System according to any one of the preceding claims, wherein said casing **(12)** comprises a tubular portion **(22)** and a closure member **(26)** mounted removable from said tubular portion **(22)** in association with said pre-filtering assembly **(500)**.

7. System according to claim **6,** wherein said pre-filtering cavity **(32)** is axially delimited by said closure member **(26)** and laterally delimited by said tubular portion **(22).**

8. System according to claim **6** or **7,** wherein said tubular portion **(22)** defines said inlet passageway **(34)** and said outlet passageway **(36).**

9. System according to any one of claims **6** to **8,** wherein said closure member **(26)** further comprises a storing container **(20)** facing towards said compacting assembly **(200)** and configured to store the microplastics collected and compacted by said compacting assembly **(200).**

10. System according to claim **9,** wherein said closure member **(26)** provides a supporting structure which supports both said storing container **(20)** and said pre-filtering assembly **(500),** forming a unitary module mounted removable from the tubular portion **(22).**

## Patentansprüche

1. Mikroplastik-Filtersystem für eine Waschmaschine, wie beispielsweise eine Haushaltswaschmaschine (WM), wobei das System aufweist:
- ein Gehäuse (12), das im Inneren einen Filterhohlraum (14) definiert und aufweist
einen Einlass (16), der in den Filterhohlraum (14) führt und konfiguriert ist, stromabwärts einer Ablaufpumpe (600) der Waschmaschine (WM) hydraulisch angeschlossen zu sein und ein Mikroplastik enthaltendes Fluid aufzunehmen, und
einen Auslass (18), der konfiguriert ist, das Fluid, das den Filterhohlraum (14) durchlaufen soll, abzugeben, aus dem die Mikroplastikpartikel im Wesentlichen entfernt wurden;
- eine Filtervorrichtung (100), die in dem Filterhohlraum (14) enthalten ist und konfiguriert ist, von dem Fluid durchströmt zu werden, das durch den Einlass (16) in das Gehäuse (12) eintritt und durch den Auslass (18) austritt, wodurch die Mikroplastikpartikel im Inneren zurückgehalten werden;
- eine Verdichtungsvorrichtung (200), die sich in dem Filterhohlraum (14) befindet und konfiguriert ist, die von der Filtervorrichtung (100) zurückgehaltenen Feststoffpartikel zu sammeln und zu verdichten;
wobei das Filtersystem **dadurch gekennzeichnet ist, dass** das Gehäuse (12) einen Vorfilterhohlraum (32) definiert, der fluidisch vom Filterhohlraum (14) getrennt ist, und ferner aufweist
einen Einlasskanal (34), der in den Vorfilterhohlraum (32) führt und konfiguriert ist, stromabwärts einer Waschtrommel (T) der Waschmaschine (WM) angeschlossen zu sein und das die Mikroplastik und etwaige Fremdkörper enthaltenden Fluid aufzunehmen, und
einen Auslasskanal (36), der konfiguriert ist, das den Vorfilterhohlraum (32) durchströmende, mikroplastikhaltige Fluid, aus dem die Fremdkörper im Wesentlichen entfernt wurden, abzugeben, und der konfiguriert ist, stromaufwärts der Ablaufpumpe (600) und des Einlasses (16) fluidisch angeschlossen ist; und
dass es ferner eine Vorfiltervorrichtung (500) aufweist, die in dem Vorfilterhohlraum (32) angeordnet ist und konfiguriert ist, von dem Fluid durchströmt zu werden, das durch den Einlasskanal (34) in das Gehäuse (12) eintritt und durch den Auslasskanal (36) austritt, wodurch gegebenenfalls vorhandene Fremdkörper zurückgehalten werden.

2. System nach Anspruch 1, wobei die Vorfiltervorrichtung (500) eine quer verlaufende Trennwand (502) aufweist, die sich in dem Vorfilterhohlraum (32) befindet und mindestens eine schmale Öffnung (504) aufweist, die konfiguriert ist, von dem mikroplastikhaltigen Fluid durchströmt zu werden und gegebenenfalls vorhandene Fremdkörper aufzufangen.

3. System nach Anspruch 1 oder 2, das ferner die Ablaufpumpe (600) aufweist.

4. System nach Anspruch 3, wobei die Ablaufpumpe (600) von dem Gehäuse (12) getragen wird.

5. System nach Anspruch 4, wobei die Ablaufpumpe (600) auf dem Gehäuse (12) auf der der Vorfiltervorrichtung (500) gegenüberliegenden Seite angeordnet ist.

6. System nach einem der vorstehenden Ansprüche, wobei das Gehäuse (12) einen rohrförmigen Abschnitt (22) und ein Verschlusselement (26) aufweist, das in Verbindung mit der Vorfiltervorrichtung (500) abnehmbar an dem rohrförmigen Abschnitt (22) angebracht ist.

7. System nach Anspruch 6, wobei der Vorfilterhohlraum (32) axial durch das Verschlusselement (26) und seitlich durch den rohrförmigen Abschnitt (22) begrenzt ist.

8. System nach Anspruch 6 oder 7, wobei der rohrförmige Abschnitt (22) den Einlasskanal (34) und den Auslasskanal (36) definiert.

9. System nach einem der Ansprüche 6 bis 8, wobei das Verschlusselement (26) ferner einen Aufbewahrungsbehälter (20) aufweist, der der Verdichtungsvorrichtung (200) zugewandt ist und dazu ausgelegt ist, die von der Verdichtungsvorrichtung (200) gesammelten und verdichteten Mikroplastikpartikel aufzubewahren.

10. System nach Anspruch 9, wobei das Verschlusselement (26) eine Stützstruktur bereitstellt, die sowohl den Aufbewahrungsbehälter (20) als auch die Vorfiltervorrichtung (500) stützt und ein einheitliches Modul bildet, das abnehmbar am röhrenförmigen Abschnitt (22) angebracht ist.

## Revendications

1. Système de filtrage des microplastiques pour une machine à laver, telle qu'une machine à laver le linge (WM) ; ledit système comprenant :
- une enveloppe extérieure (12) définissant intérieurement une cavité de filtrage (14) et comprenant
une entrée (16) menant dans la cavité de filtrage (14) et configurée pour être connectée hydrauliquement en aval d'une pompe de vidange (600) de ladite machine à laver (WM) et pour recevoir un fluide contenant des microplastiques, et
une sortie (18) configurée pour délivrer ledit fluide destiné à traverser ladite cavité de filtrage (14), à partir duquel lesdits microplastiques ont été substantiellement retirés ;
- un ensemble de filtrage (100) contenu dans la cavité de filtrage (14) et configuré pour être traversé par le fluide entrant dans ladite enveloppe extérieure(12) par l'entrée (16) et sortant par ladite sortie (18), en piégeant ainsi intérieurement lesdits microplastiques ;
- un ensemble de compactage (200) situé dans ladite cavité de filtrage (14) et configuré pour collecter et compacter les particules solides piégées par l'ensemble de filtrage (100) ;
ledit système de filtrage étant **caractérisé en ce que** ladite enveloppe extérieure (12) définit une cavité de pré-filtrage (32) qui est séparée de manière fluidique de la cavité de filtrage (14), et comprend en outre
un passage d'entrée (34) menant dans ladite cavité de pré-filtrage (32) et configuré pour être raccordé en aval d'une cuve de lavage (T) de ladite machine à laver (WM) et pour recevoir ledit fluide contenant des microplastiques et de quelconques corps étrangers, et
un passage de sortie (36) configuré pour délivrer ledit fluide contenant des microplastiques destiné à traverser ladite cavité de pré-filtrage (32), à partir duquel lesdits corps étrangers ont été substantiellement retirés, et configuré pour être raccordé de manière fluidique en amont de ladite pompe de vidange (600) et de ladite entrée (16) ; et
**en ce qu'**il comprend en outre un ensemble de pré-filtrage (500) situé dans ladite cavité de pré-filtrage (32) et configuré pour être traversé par le fluide entrant dans ladite enveloppe extérieure (12) par ledit passage d'entrée (34) et sortant par ledit passage de sortie (18), en piégeant ainsi lesdits corps étrangers, le cas échéant.

2. Système selon la revendication 1, dans lequel ledit ensemble de pré-filtrage (500) comprend un septum transversal (502) situé dans ladite cavité de pré-filtrage (32) et présentant au moins une ouverture étroite (504) configurée pour être traversée par ledit fluide contenant des microplastiques et pour piéger lesdits corps étrangers, le cas échéant.

3. Système selon la revendication 1 ou 2, comprenant en outre ladite pompe de vidange (600).

4. Système selon la revendication 3, dans lequel ladite pompe de vidange (600) est supportée par ladite enveloppe extérieure (12).

5. Système selon la revendication 4, dans lequel ladite pompe de vidange (600) est située sur ladite enveloppe extérieure (12) sur le côté opposé audit ensemble de pré-filtrage (500).

6. Système selon l'une quelconque des revendications précédentes, dans lequel ladite enveloppe extérieure (12) comprend une partie tubulaire (22) et un élément de fermeture (26) monté de manière amovible à partir de ladite partie tubulaire (22) en association avec ledit ensemble de pré-filtrage (500).

7. Système selon la revendication 6, dans lequel ladite cavité de pré-filtrage (32) est délimitée axialement par ledit élément de fermeture (26) et délimitée latéralement par ladite partie tubulaire (22).

8. Système selon la revendication 6 ou 7, dans lequel ladite partie tubulaire (22) définit ledit passage d'entrée (34) et ledit passage de sortie (36).

9. Système selon l'une quelconque des revendications6 à 8, dans lequel ledit élément de fermeture (26) comprend en outre un récipient de stockage (20) tourné vers ledit ensemble de compactage (200) et configuré pour stocker les microplastiques collectés et compactés par ledit ensemble de compactage (200).

10. Système selon la revendication 9, dans lequel ledit élément de fermeture (26) fournit une structure de support qui supporte à la fois ledit récipient de stockage (20) et ledit ensemble de pré-filtrage (500), en formant un module unitaire monté de manière amovible à partir de la partie tubulaire (22).
